(19) Europäisches Patentamt
European Patent Office
Office européen des brevets

(11) Publication number: **0 188 791**
**A1**

(12) # EUROPEAN PATENT APPLICATION

(21) Application number: 85116360.0

(22) Date of filing: 20.12.85

(51) Int. Cl.⁴: **C 08 L 69/00**, C 08 L 67/02
//
(C08L69/00, 67:02, 83:10),
(C08L67/02, 69:00, 83:10)

(30) Priority: 02.01.85 US 688374

(43) Date of publication of application: 30.07.86
Bulletin 86/31

(84) Designated Contracting States: DE FR GB IT NL

(71) Applicant: GENERAL ELECTRIC COMPANY, 1 River Road, Schenectady New York 12305 (US)

(72) Inventor: Luce, John Benjamin, 800 Magnolia Drive, Mt. Vernon Indiana 47620 (US)

(74) Representative: Catherine, Alain et al, General Electric - Deutschland Munich Patent Operations Frauenstrasse 32, D-8000 München 5 (DE)

(54) **Composition of an aromatic polycarbonate resin, a polyalkylene terephthalate resin and/or an amorphous copolyester resin and a modifier.**

(57) A composition comprising:
(a) an aromatic polycarbonate resin;
(b) a polyalkylene terephthalate resin and/or an amorphous copolyester resin; and
(c) a modifier therefore comprising a block copolymer comprising
(i) blocks derived from an aromatic polycarbonate, and
(ii) blocks derived from a diorganopolysiloxane, (b) and (c) in such quantities that the composition has reduced melt viscosity and similar or better impact properties in comparison to the polycarbonate.

EP 0 188 791 A1

# COMPOSITION

## BACKGROUND OF THE INVENTION

Aromatic carbonate polymers are well known, commercially available materials having a wide variety of applications in the plastics art. Such carbonate polymers may be prepared by reacting a dihydric phenol, such as 2,2-bis(4-hydroxyphenyl)propane, with a carbonate precursor, such as phosgene, in the presence of an acid binding agent. Generally speaking, aromatic polycarbonate resins offer a high resistance to the attack of mineral acids, may be easily molded, are physiologically harmless as well as strain resistant. It is also well known that polycarbonate resins have high impact strength below a critical thickness of between about 1/8 and 1/4 inch. Above this average thickness the impact strength of polycarbonate resins is low. Moreover, the impact strength of polycarbonate resins decreases rapidly as the temperature decreases below about -5°C. and also after aging the polymers at elevated temperatures above about 100°C. These characteristics consequently limit the fields of application for unmodified aromatic polycarbonate resins.

Accordingly, in an effort to improve the impact resistant behavior of polycarbonate resins, it has been proposed to add modifiers to the polycarbonate. In Goldblum, U.S. 3,431,224, ~~assigned to the same assignee as the present invention~~, for example, it is proposed to add modifiers in certain proportions, the modifiers comprising at least one member of the class consisting of polyethylene, polypropylene, polyisobutylene, a copolymer of ethylene and an ethyl acrylate, a copolymer of ethylene and propylene, a cellulose ester, a polyamide, a polyvinyl acetal, an alkyl cellulose ester, and a polyurethane elastomer.

Although the results with such modifiers are generally excellent in thin sections, e.g., in parts of 1/8 inch thickness, there is a tendency for failure to occur with these modifiers in thicker molded parts of 1/4 inch or more, and such failure is of the undesirable brittle type.

There still remains a recurring need to discover polycarbonate molding resins which are easier to process and maintain good impact strength without brittleness or may even show better impact particularly in thickness above the critical thickness of polycarbonate.

SUMMARY OF THE INVENTION

It has now been discovered that certain resin blends comprising

(a) an aromatic polycarbonate,

(b) an amorphous polyester and/or a polyalkylene terephthalate and

(c) a block copolymer resin including polycarbonate and diorganopolysiloxane units provide desirable physical properties which are not obtainable with previously known resin blends. The resultant resin blends have a much reduced melt viscosity, which provides easier processing characteristics. In addition, articles molded from the novel resin blends have better impact properties. They have a tendency to show good impact strength and retain ductility upon break.

DETAILED DESCRIPTION OF THE INVENTION

In accordance with the present invention it has been found that the foregoing desirable properties are obtained with resin mixtures comprising an intimate blend of:

(a) an aromatic polycarbonate resin;

(b) an amorphous copolyester copolymer resin, and/or a polyalkylene terephthalate and

(c) a modifier therefore comprising a block copolymer comprising

(i) blocks derived from an aromatic polycarbonate, and

(ii) blocks derived from a diorganopolysiloxane,

(b) and (c) in such quantities that the composition has reduced melt viscosity and similar or better impact properties in comparison to polycarbonate.

The relative amounts of the components will vary broadly, but in general best results are obtained when the compositions comprise from about 25 to 98 parts, preferably about 50 to 95, by weight of the aromatic polycarbonate resin component (a), from about 1 to 50 parts by weight of the copolyester resin component (b), preferably about 2 to 25, and from about 0.5 to 25 parts by weight of the modifier component (c), preferably about 1 to about 15, based on the weight of the overall resin composition. The weight percent of component (c) is based upon the diorganosiloxane containing block of component (c). The wholly polycarbonate block of component (c) is treated as a portion of the polycarbonate in component (a). The blending of the components may be accomplished in any manner so long as a thorough inter-distribution of the components is achieved. Generally, the amorphous copolyester resin component (b) is blended with the aromatic polycarbonate resin (a), and thereafter the polycarbonate-polysiloxane block copolymer modifier is added, but this is not critical.

The blending of these materials may be accomplished by a variety of methods normally employed for incorporation of plasticizers or fillers into thermoplastic polymers, including but not limited to mixing rolls, dough mixers, Banbury mixers, extruders, and

other mixing equipment. The resulting blends may be handled in any conventional manner employed for the fabrication or manipulation of thermoplastic resins. The materials may be formed or molded using compression, injection, calendaring, extrusion and blow molding techniques, alone or in any combination. Also multiprocessing methods, such as extrusion blow molding or co-extrusion-co-injection can be used, e.g., for multilayer containers.

It should be understood that the resin mixtures prepared in accordance with the invention may also contain, in addition to the above-mentioned polymers, other additives to lubricate, reinforce, prevent oxidation, or lend color to the material. Other additives, such as mold release agents and stabilizers are well known in the art, and may be incorporated without departing from the scope of the invention.

The fact that the combination of components specified above to form a polycarbonate resin system provides a resin blend having the aforementioned properties relating to impact as well as reduced melt viscosity, is unexpected and not fully understood.

The aromatic polycarbonate resins suitable for use herein as component (a) may be prepared by reacting a dihydric phenol with a carbonate precursor, such as phosgene, a haloformate or a carbonate ester. Typically, such carbonate polymers are represented as comprising recurring structural units of the formula:

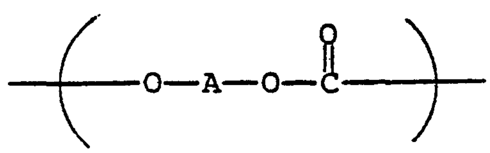

wherein A is a divalent aromatic radical of the dihydric phenol employed in the polymer producing reaction. Preferably, the carbonate polymers used to provide the resinous mixtures of the invention have an intrinsic viscosity (as measured in methylene chloride at 25°C.) ranging from about 0.30 to about 1.00 dl/g. The dihydric phenols which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are:

2,2-bis-(4-hydroxyphenyl)propane;
hydroquinone;
resorcinol;
2,2-bis-(4-hydroxyphenyl)pentane;
2,4'-(dihydroxydiphenyl)methane;
bis-(2-hydroxyphenyl)methane;
bis-(4-hydroxyphenyl)methane;
bis-(4-hydroxy-5-nitrophenyl)methane;
1,1-bis(4-hydroxyphenyl)ethane;
3,3-bis(4-hydroxyphenyl)pentane;
2,2-dihydroxydiphenyl;
2,6-dihydroxynaphthalene;
bis-(4-hydroxydiphenyl)sulfone;
bis-(3,5-diethyl-4-hydroxyphenyl)sulfone;
2,2-bis-(3,5-dimethyl-4-hydroxyphenyl)propane;
2,4'-dihydroxydiphenyl sulfone;
5'-chloro-2,4'-dihydroxydiphenyl sulfone;
bis-(4-hydroxyphenyl)diphenyl sulfone;
4'4'-dihydroxydiphenyl ether;
4,4'-dihydroxy-3,3'-dichlorodiphenyl ether;
4,4'-dihydroxy-2,5-dihydroxydiphenyl ether;
and the like.

Other dihydric phenols which are also suitable for use in the preparation of the above polycarbonates are disclosed in U.S. 2,999,835; 3,038,365; 3,334,154 and 4,131,575.

These aromatic polycarbonates can be manufactured by known processes, such as, for example and as mentioned above, by reacting a dihydric phenol with a carbonate precursor, such as phosgene, in accordance with methods set forth in the above-cited literature and U.S. 4,018,750 and 4,123,426, or by transesterification processes such as are disclosed in U.S. 3,153,008, as well as other processes known to those skilled in the art.

It is possible to employ two or more different dihydric phenols or a copolymer of a dihydric phenol with a glycol or with a hydroxy- or acid-terminated polyester or with a dibasic acid in the event a carbonate copolymer or interpolymer rather than a homopolymer is desired for use in the preparation of the polycarbonate mixtures of the invention. Branched polycarbonates are also useful, such as are described in U.S. 4,001,184. Also there can be utilized blends of a linear polycarbonate and a branched polycarbonate. Moreover, blends of any of the above materials may be employed in the practice of this invention to provide the aromatic polycarbonate. In any event, the preferred aromatic carbonate polymer for use as component (a) herein is a homopolymer derived from 2,2-bis(4-hydroxyphenyl)propane (bisphenol-A).

The subject invention also comprises as component (b) an amorphous copolyester polymer resin and/or a polyalkylene terephthalate.

The poly(alkylene terephthalate) resins suitable for use as component (b) herein are very well known and may be prepared by methods set forth in Whinfield, U.S. 2,465,319 and Pengilly, U.S. 3,047,539. The resins will generally comprise a $C_1$-$C_{10}$ polyalkylene terephthalate. Poly(ethylene terephthalate) is generally preferred and may be utilized as virgin or scrap

polymer. If desired, other polyalkylene terephthalates, such as poly(1,4-butylene terephthalate), or mixtures of polyalkylene terephthalates may be employed.

The amorphous copolyester copolymer resin for use as component (b) herein is a polyester copolymer which can, without limitation, comprise the reaction product of a glycol portion and a diacid portion. The glycol portion comprises 1,4-cyclohexanedimethanol with or without an alkylene glycol of two to ten carbon atoms, inclusive, preferably two to four carbon atoms, more preferably two carbon atoms - ethylene glycol. When an alkylene glycol is present, for example ethylene glycol, the molar ratio of the 1,4-cyclohexanedimethanol to ethylene glycol in the glycol portion of the polymer is from about 4:1 to 1:4. The acid portion comprises terephthalic acid, isophthalic acid, or mixtures of both acids.

This copolyester component may be prepared by procedures well known to those skilled in this art, such as by condensation reactions substantially as shown and described in U.S. 2,901,466.

The copolyesters for use as component (b) in the subject invention generally will have an internal viscosity of at least about 0.4 dl/gm. as measured in 60/40 phenol/tetrachloroethane or other similar solvent at about 25°C. and will have a heat distortion temperature of from about 60°C. to 70°C. The relative amounts of the 1,4-cyclohexanedimethanol to ethylene glycol in the glycol portion may vary so long as the molar ratio of 1,4-cyclohexanedimethanol to ethylene glycol is from 1:4 to 4:1, in order to provide a polyester copolymer having suitable properties and a heat distortion temperature within the recited range.

A preferred copolyester for use as the amorphous polyester copolymer component (b) in the subject inven-

tion is a copolyester as described above wherein the glycol portion has a predominance of ethylene glycol over 1,4-cyclohexanedimethanol, for example greater than 50/50, and especially preferable is about 70 molar ethylene glycol to 30 molar 1,4-cyclohexanedimethanol, and the acid portion is terephthalic acid. A preferred copolyester of this type is commercially available under the tradename KODAR PETG 6763 from Eastman Kodak Company. Another preferred copolyester of this type is where the 1,4-cyclohexanedimethanol is in molar excess over the alkylene glycol, ethylene glycol and the acid portion is terephthalic. This is available commercially from Eastman under the tradename KODAR PCTG.

A still further preferred copolyester of this type is where 1,4-cyclohexanedimethanol is the sole glycol monomer and the acid portion is a mixture of terephthalic and isophthalic. This copolyester is also available from Eastman Kodak under the tradename KODAR A150.

The modifier component (c) used herein are polysiloxane-polycarbonate block copolymers and are generally well known in the art. Suitable polysiloxane-polycarbonate block copolymer include the compounds disclosed in U.S. 4,027,072 and U.S. 4,123,588 to Molari, Jr. ~~(incorporated herein by reference)~~ as being useful as adhesives in spall- resistant laminates. The polysiloxane-polycarbonate block copolymers can be illustrated by the average formula:

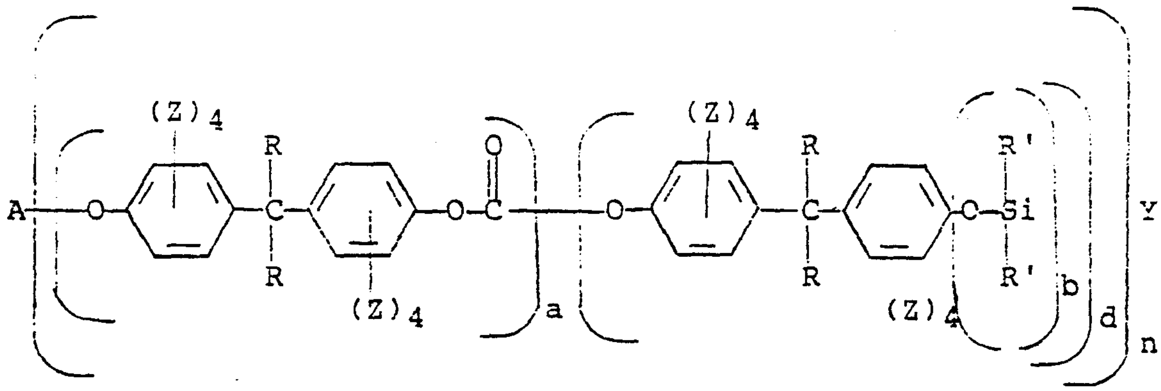

where n is an integer equal to from 1 to about 1000, a is equal to from 1 to about 200, b is equal to from about 5 to about 200, the ratio of a to b varying from about 0.05 to about 3, d is 1 or more, Y is

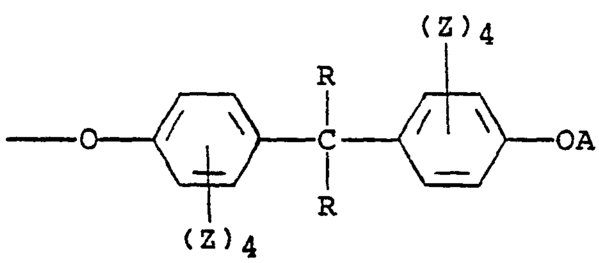

A is a member selected from the class of hydrogen and

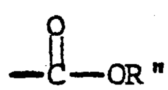,

R is a member selected from the class of hydrogen, monovalent hydrocarbon radicals and halogenated monovalent hydrocarbon radicals, R' is a member individually selected from the class of monovalent hydrocarbon radicals and cyanoalkyl radicals, R" is a member selected from the class consisting of monovalent hydrocarbon radicals and halogenated hydrocarbon radicals, and Z is a member selected from the class of hydrogen, lower alkyl radicals and halogen radicals and mixtures thereof.

In preferred copolymers, b will have an average value of from about 15 to about 90, inclusive, and when b has an average value in that range, the ratio of a to

b is preferably from about 0.067 to about 0.45, inclusive.

Included within the radicals represented by R are aryl radicals and halogenated aryl radicals such as phenyl, chlorophenyl, xylyl, tolyl, etc.; aralkyl radicals such as phenylethyl, benzyl, etc.; aliphatic, haloaliphatic and cycloaliphatic radicals such as alkyl, alkenyl, cycloalkyl, haloalkyl including methyl, ethyl, propyl, chlorobutyl, cyclohexyl, etc.: R can be all the same radicals or any two or more of the aforementioned radicals. R is preferably methyl. R' includes all radicals included by R above except hydrogen, where R' can be all the same radical or any two or more of the aforementioned R radicals except hydrogen, and R' is preferably methyl. R' also includes, in addition to all the radicals included by R, except hydrogen, cyanoalkyl radicals such as cyanoethyl, cyanobutyl, etc., radicals. Radicals that are included within the definition of Z of Formula 2 are hydrogen, methyl, ethyl, propyl, chloro, bromo, iodo, etc. and combinations thereof, and Z is preferably hydrogen.

The hydrolytically stable copolymers of the present invention can be further described as comprising recurring copolymeric units of a diorganopolysiloxane joined by substituted aryloxy silicon linkages to a polyester of dihydric phenol and a precursor of carbonic acid, where each of said recurring copolymeric units comprises by average weight from about 10 to about 75% of said diorganopolysiloxane, and preferably from about 40 to 70% by weight.

The polysiloxane polycarbonate copolymer can be produced by the methods discussed in the aforementioned Molari, Jr. patents.

DESCRIPTION OF THE PREFERRED EMBODIMENTS

In order that those skilled in the art may better

understand how the present invention may be practiced, the following examples are given by way of illustration and not by way of limitation. All parts and percentages are by weight unless otherwise noted. The various polycarbonate resin mixtures were extruded in a Sterling extruder at and molded in a 3 oz. Van Dorn injection molding machine.

EXAMPLES

An aromatic polycarbonate derived from 2,2-bis(4-hydroxyphenyl)propane (bisphenol-A) and having an intrinsic viscosity (IV) in the range of from about 0.46 to about 0.49 dl/g. as determined in a methylene chloride solution at 25°C. (LEXAN® 140, General Electric Company) is mixed with polyethylene terephthalate (PET) poly(ethylene isophthalate) or an amorphous copolyester copolymer resin in the form of a poly((0.7) -ethylene-co-(0.3)-1,4-cyclohexanedimethylene terephthalate) resin KODAR® PETG 6763 (PETG Eastman Kodak Company) or 1,4-cyclohexanedimethanol and a mixture of isophthalate and terephthalate, KODAR® A150 from Eastman (A150), together with a polysiloxane polycarbonate block copolymer having polymer units derived from polydimethylsiloxane (DMS) and poly(bisphenol-A carbonate). The weight percent of block polydimethylsiloxane polycarbonate is approximately 45% of the polysiloxane polycarbonate block copolymer used. The Intrinsic Viscosity (I.V.) of component (c) used is 0.85 in methylene chloride at 25°C. In the tables, the quantity of block polydimethylsiloxane polycarbonate in the composition is expressed as "wt. % DMS". The mixture was then fed to an extruder. The resulting extrudates are comminuted into pellets. The pellets are injection molded into test specimens of about 2 1/2" x 1/2" x 1/8" and 2 1/2" x 1/2" x 1/4", the latter dimension being specimen thickness. Where indicated, Izod impact

strengths of these specimens were measured according to ASTM D256. The numerical superscripts indicate the percent of test specimens which were ductile. The Kasha Index (KI) is a measurement of the melt viscosity of the resinous compositions. The procedure for determining the KI is as follows: 7 grams of resinous pellets, dried a minimum of 90 minutes at 125°C, are added to a modified Tinius-Olsen model T3 melt indexer; the temperature in the indexer is maintained at 300°C and the resin is heated at this temperature for six minutes; after six minutes the resin is forced through a 0.04125 inch radius orifice using a plunger of radius of 0.1865 inch and an applied force of 17.7 lbs; the time required for the plunger to travel 2 inches is measured in centiseconds and this is reported as the KI. The higher the KI the higher the melt viscosity of the resin and the more difficult it is to process.

The results in Table I were obtained after extrusion at 270°C and molding at 260°C. Components (a) and (b) add to 100 parts by weight.

TABLE I

| WT.% PC | WT.% PET | WT.% PETG | WT.% A150 | WT.% DMS | K.I. C.S. | NOTCHED IZOD Ft/LB/IN 1/8" | 1/4" |
|---|---|---|---|---|---|---|---|
| 50 | | | 50 | 0 | 1435 | $1.98^{0}$ | $1.38^{0}$ |
| 50 | | | 50 | 1 | 1410 | $5.82^{20}$ | $1.73^{0}$ |
| 50 | | | 50 | 2 | 1410 | $17.86^{100}$ | $2.21^{0}$ |
| 50 | | | 50 | 4 | 1310 | $18.65^{100}$ | $12.58^{100}$ |
| 80 | | | 20 | 0 | 1810 | $2.12^{0}$ | $1.65^{0}$ |
| 80 | | | 20 | 1 | 2125 | $15.61^{100}$ | $2.03^{0}$ |
| 80 | | | 20 | 2 | 1820 | $16.00^{100}$ | $2.65^{0}$ |
| 80 | | | 20 | 4 | 1685 | $16.27^{100}$ | $11.71^{100}$ |
| 50 | 50 | | | 0 | 1020 | $1.20^{0}$ | $1.11^{0}$ |
| 50 | 50 | | | 1 | 1170 | $1.47^{0}$ | $1.22^{0}$ |
| 50 | 50 | | | 2 | 1105 | $1.53^{0}$ | $1.39^{0}$ |
| 50 | 50 | | | 4 | 1130 | $2.00^{0}$ | $1.66^{0}$ |

TABLE I (cont'd)

| WT.% PC | WT.% PET | WT.% PETG | WT.% A150 | WT.% DMS | K.I. C.S. | NOTCHED IZOD Ft/LB/IN 1/8" | 1/4" |
|---|---|---|---|---|---|---|---|
| 80 | 20 | | | 0 | 1490 | $2.00^{0}$ | $1.38^{0}$ |
| 80 | 20 | | | 1 | 1670 | $3.00^{0}$ | $1.73^{0}$ |
| 80 | 20 | | | 2 | 1570 | $13.87^{100}$ | $2.43^{0}$ |
| 80 | 20 | | | 4 | 1700 | $14.00^{100}$ | $10.99^{100}$ |
| 50 | | 50 | | 0 | 1390 | $1.67^{0}$ | $1.38^{0}$ |
| 50 | | 50 | | 1 | 1340 | $1.67^{0}$ | $1.38^{0}$ |
| 50 | | 50 | | 2 | 1540 | $2.67^{0}$ | $1.56^{0}$ |
| 50 | | 50 | | 4 | ---- | $14.00^{100}$ | $2.07^{0}$ |
| 80 | | 20 | | 0 | 2060 | $1.67^{0}$ | $1.38^{0}$ |
| 80 | | 20 | | 1 | 2010 | $2.67^{0}$ | $1.73^{0}$ |
| 80 | | 20 | | 2 | 2040 | $14.00^{100}$ | $2.25^{0}$ |
| 80 | | 20 | | 4 | 1885 | $14.67^{100}$ | $11.06^{100}$ |

In the Table II below the components (a), (b) and (c) add up to 100 parts by weight. The materials are extruded at 270°C and the pellets molded at 260°C. Below are the results. VALOX® 310 from General Electric is the polybutylene terephthalate emloyed, (PBT).

TABLE II

| WT.% PC | WT.% PBT | WT.% A150 | WT.% PETG | WT.% DMS | K.I. CSec. | NOTCHED IZOD Ft/LB/IN 1/8" | 1/4" |
|---|---|---|---|---|---|---|---|
| 100 | | | | 0 | 3060 | $16.5^{100}$ | ---- |
| 90 | 10 | | | 0 | 1980 | $12.1^{60}$ | ---- |
| 88 | 10 | | | 1 | 1910 | $15.8^{100}$ | ---- |
| 85 | 10 | | | 2.5 | 1770 | $17.2^{100}$ | ---- |
| 80 | 10 | | | 5 | 1810 | $16.7^{100}$ | $15.5^{100}$ |
| 70 | 10 | | | 10 | 1690 | $14.5^{100}$ | ---- |
| 70 | 20 | | | 5 | 1530 | $14.5^{100}$ | $13.7^{100}$ |
| 40 | 50 | | | 5 | 650 | $9.9^{80}$ | ---- |
| 90 | 5 | | | 2.5 | 2920 | $17.6^{100}$ | ---- |
| 88 | | 10 | | 1 | 2580 | $17.7^{100}$ | $2.4^{0}$ |
| 85 | | 10 | | 2.5 | 2520 | $18.4^{100}$ | ---- |
| 70 | | 10 | | 10 | 2690 | $16.1^{100}$ | ---- |

**TABLE II** (cont'd)

| WT.% PC | WT.% PBT | WT.% A150 | WT.% PETG | WT.% DMS | K.I. CSec. | NOTCHED IZOD Ft/LB/IN 1/8" | 1/4" |
|---|---|---|---|---|---|---|---|
| 70 | | 20 | | 5 | 1850 | $18.6^{100}$ | ----- |
| 40 | | 50 | | 5 | 1120 | $26.3^{100}$ | $16.9^{100}$ |
| 90 | | 5 | | 2.5 | 2800 | $18.2^{100}$ | ----- |
| 85 | | 0 | 10 | 2.5 | 3650 | $17.2^{100}$ | ----- |

WHAT IS CLAIMED IS:

1. A composition comprising:

(a) an aromatic polycarbonate resin;

(b) a polyalkylene terephthalate resin and/or an amorphous copolyester resin; and

(c) a modifier therefore comprising a block copolymer comprising

(i) blocks derived from an aromatic polycarbonate, and

(ii) blocks derived from a diorganopolysiloxane, (b) and (c) in such quantities that the composition has reduced melt viscosity and similar or better impact properties in comparison to the polycarbonate.

2. The composition of claim 1 wherein the b component is a polyalkylene terephthalate.

3. The composition of claim 1 wherein the b component is an amorphous copolyester resin.

4. The composition of claim 1 wherein the b component is a mixture of a polyalkylene terephthalate and an amorphous copolyester resin.

5. The composition of claim 3 wherein the amorphous copolyester resin has a glycol portion comprising 1,4-cyclohexane dimethanol and an acid portion comprising terephthalic acid, isophthalic acid or mixtures thereof.

6. The composition in accordance with claim 5 wherein the glycol portion also have alkylene glycol units, the alkylene being from two to ten carbon atoms.

7. The composition in accordance with claim 6 wherein the alkylene group is ethylene.

8. The composition in accordance with claim 7 wherein the molar ratio of ethylene glycol to 1,4-cyclohexane dimethanol is from about 1:4 to 4:1.

9. The composition in accordance with claim 1, wherein the polycarbonte resin component (a) comprises recurring structural units of the formula:

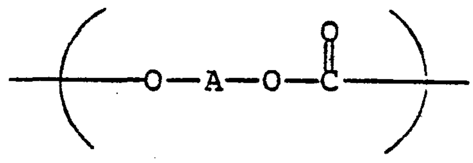

wherein A is a divalent aromatic radical of a dihydric phenol, and the block copolymer modifier (c) comprises a polysiloxane polycarbonate block copolymer having the average formula:

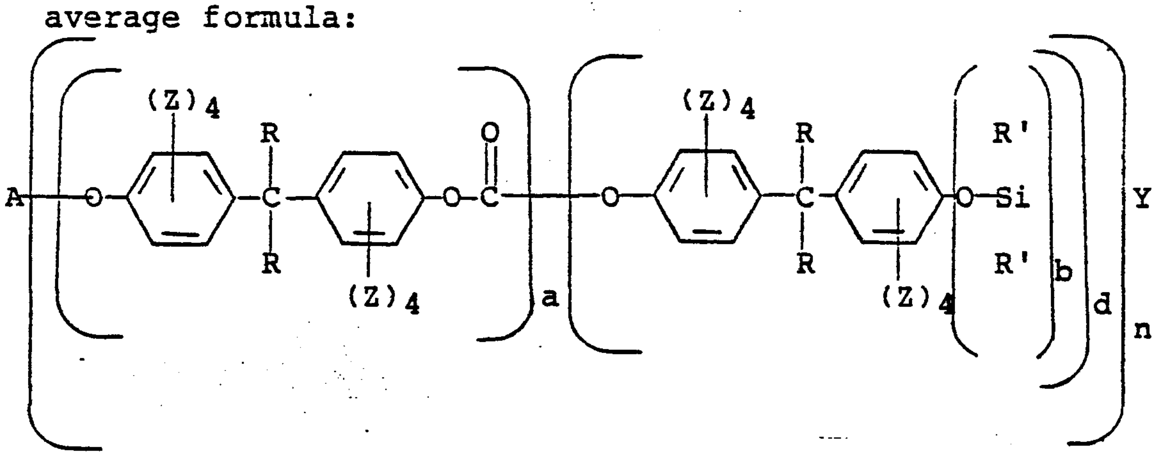

where n is an integer equal to from 1 to about 1000, a is equal to from 1 to about 200, b is equal to from about 5 to about 200, the ratio of a to b varying from about 0.05 to about 3, d is 1 or more, Y is

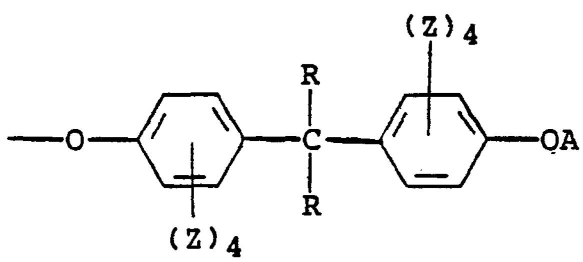

A is a member selected from the class of hydrogen and

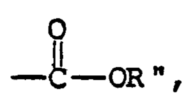

R is a member individually selected from the class of hydrogen, monovalent hydrocarbon radicals and

halogenated monovalent hydrocarbon radicals, R' is a member individually selected from the class of monovalent hydrocarbon radicals and cyanoalkyl radicals, R" is a member selected from the class consisting of monovalent hydrocarbon radicals and halogenated hydrocarbon radicals, and Z is a member selected from the class of hydrogen, lower alkyl radicals and halogen radicals and mixtures thereof.

10. The composition in accordance with claim 2 wherein said aromatic polycarbonate resin comprises poly(2,2- dihydroxydiphenyl-propane) carbonate.

11. The composition in accordance with claim 3 wherein said aromatic polycarbonate resin comprises poly(2,2- dihydroxydiphenyl-propane) carbonate.

12. The composition in accordance with claim 3 wherein the poly(alkylene terephthalate) resin is polyethylene terephthalate.

13. The composition in accordance with claim 3 wherein the poly(alkylene terephthalate) resin is a polybutylene terephthalate resin.

14. The composition in accordance with claim 1 wherein (a) is from about 25 to 98 weight percent, (b) is from about 1 to 50 weight percent and (c) is from about 0.5 to 25 weight percent of the resin components (a), (b) and (c).

15. The composition in accordance with claim 14 wherein (a) is from about 50 to 95 weight percent, (b) is from about 2 to 25 weight percent, (c) is from about 1 to 15 weight percent.

0188791

European Patent Office

# EUROPEAN SEARCH REPORT

Application number
EP 85 11 6360

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 105 388 (GENERAL ELECTRIC)<br>* Claim 31; examples 4,10 *<br>--- | 1,2,6, 7,9-14 | C 08 L 69/00<br>C 08 L 67/02 //<br>(C 08 L 69/00<br>C 08 L 67:02<br>C 08 L 83:10 )<br>(C 08 L 67/02<br>C 08 L 69:00<br>C 08 L 83:10 ) |
| Y | US-A-4 224 215 (G.F. MACKE)<br>* Claims 1-13 *<br>--- | 1-15 | |
| Y | US-A-4 391 954 (S.W. SCOTT)<br>* Claims 1-5 *<br>--- | 1-15 | |
| A | US-A-4 161 498 (R.C. BOPP)<br>* Claims 1-10 *<br>--- | 1,14 | |
| A | US-A-4 155 898 (R.C. BOPP et al.)<br>* Claims 1-10 *<br>--- | 1-15 | TECHNICAL FIELDS SEARCHED (Int. Cl.4) |
| A | EP-A-0 135 794 (BAYER)<br>* Claims 1-3 *<br>----- | 1,2,6, 7,9-15 | C 08 L |

The present search report has been drawn up for all claims

| Place of search | Date of completion of the search | Examiner |
|---|---|---|
| THE HAGUE | 16-04-1986 | DECOCKER L. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document